# EUROPEAN PATENT APPLICATION

(11) **EP 2 226 495 A1**
(43) Date of publication of application: **08.09.2010**
(21) Application number: 08850051.7
(22) Date of filing: 14.11.2008
(51) Int. Cl.: F02P 3/01, F02B 11/00, F02B 23/00, F02B 23/08, F02B 23/10, F02B 75/04, F02D 13/02, F02D 15/02, F02D 41/02, F02D 41/04, F02P 23/04

(54) **INTERNAL COMBUSTION ENGINE**

(30) Priority: 16.11.2007 JP 2007298294; 16.11.2007 JP 2007298409; 23.06.2008 JP 2008163355
(71) Applicant: Nissan Motor Co., Ltd., Kanagawa 221-0023 (JP)
(72) Inventor: TAKAHASHI, Eiji, Kanagawa 243-0123 (JP); SHIRAISHI, Taisuke, Kanagawa 243-0123 (JP); URUSHIHARA, Tomonori, Kanagawa 243-0123 (JP)
(74) Representative: Grünecker, Kinkeldey, Stockmair & Schwanhäusser Anwaltssozietät
(86) International application number: PCT/JP2008/071166
(87) International publication number: WO 2009/064028

(57) **Abstract**

An internal combustion engine (100) comprises an intake valve (31) which opens and closes an intake port (30), a valve timing adjustment device (200) which adjusts a valve timing of the intake valve (31), a discharge portion (50) including a first electrode (51), a dielectric (53) covering the first electrode (51), and a second electrode (52) disposed at a position facing the dielectric (53), where a discharge chamber (55) formed between the second electrode (52) and the dielectric (53) is configured so as to face the combustion chamber (13) and a non-equilibrium plasma discharge is generated in the discharge chamber (55), a voltage impressing means (60) which impresses a voltage to the discharge portion (50) such that the radicals are produced in the discharge chamber (55) by the non-equilibrium plasma discharge, and a controller (70) which controls the valve timing control device (200) to close the intake valve (31) in an intake valve close period in which a piston lowers from an exhaust top dead center to an intake bottom dead center so as to diffuse the radicals in the discharge chamber (55) into the combustion chamber (13). Thereby, an ignition performance improvement effect of the internal combustion engine (100) can be enhanced.

## Description

### TECHNICAL FIELD

This invention relates to an internal combustion engine which supplies radicals into a combustion chamber.

### BACKGROUND ART

JP2007-309160A published by the Japan Patent Office in 2007 proposes a compression-ignited internal combustion engine where a discharge portion performing non-equilibrium plasma discharge is provided so as to face a central portion of a combustion chamber and the radicals are produced by performing non-equilibrium plasma discharge at the discharge portion. Since the radicals are active chemical species with high reactivity, ignition performance for a fuel mixture is improved.

### DISCLOSURE OF THE INVENTION

In the internal combustion engine according to the prior art, since the discharge portion is formed by providing a recess in a cylinder head, the radicals produced in the discharge portion hardly flow into the side of the combustion chamber so that the radicals and the fuel mixture in the combustion chamber are hard to mix. Therefore, according to this internal combustion engine, the ignition performance improvement effect obtained by the radicals is limited.

It is therefore an object of this invention to provide an internal combustion engine with a high ignition performance improvement effect.

To achieve the abovementioned object, this invention provides an internal combustion engine which supplies radicals to a combustion chamber, comprising: an intake valve which opens and closes an intake port, a valve timing adjustment device which adjusts a valve timing of the intake valve, a discharge portion including a first electrode, a dielectric covering the first electrode, and a second electrode disposed at a position facing the dielectric, where a discharge chamber formed between the second electrode and the dielectric is configured so as to face the combustion chamber and a non-equilibrium plasma discharge is generated in the discharge chamber, a voltage impressing means which impresses a voltage to the discharge portion such that the radicals are produced in the discharge chamber by the non-equilibrium plasma discharge, and a controller which controls the valve timing control device to close the intake valve in an intake valve close period in which a piston lowers from an exhaust top dead center to an intake bottom dead center so as to diffuse the radicals in the discharge chamber into the combustion chamber.

The details as well as other features and advantages of this invention are set forth in the remainder of the specification and are shown in the accompanying drawings.

### BRIEF DESCRIPTION OF THE DRAWINGS

FIG. 1 is a schematic vertical sectional view of a compression - ignited internal combustion engine according to this invention.
FIG. 2 is a perspective view of a variable valve device for an intake valve provided in the internal combustion engine.
FIG. 3 is a diagram illustrating change of valve characteristics of the intake valve according to the variable valve device.
FIG. 4 is a diagram illustrating contents of an operation map of the internal combustion engine.
FIGs. 5A - 5E are diagrams illustrating an operation of radical diffusion control.
FIG. 6 is a diagram illustrating an operation map of an internal combustion engine according to a second embodiment of this invention.
FIGs. 7A to 7E are diagrams illustrating an operation of second radical diffusion control of the internal combustion engine according to the second embodiment of this invention.
FIG. 8 is a schematic vertical sectional view of an internal combustion engine according to a third embodiment of this invention.
FIGs. 9A and 9B are schematic views of an internal combustion engine according to a fourth embodiment of this invention.
FIG. 10 is a schematic vertical sectional view of an internal combustion engine according to a fifth embodiment of this invention.
FIGs. 11A to 11C are diagrams illustrating a stratification operation of the internal combustion engine according to the fifth embodiment of this invention.

### BEST MODES FOR CARRYING OUT THE INVENTION

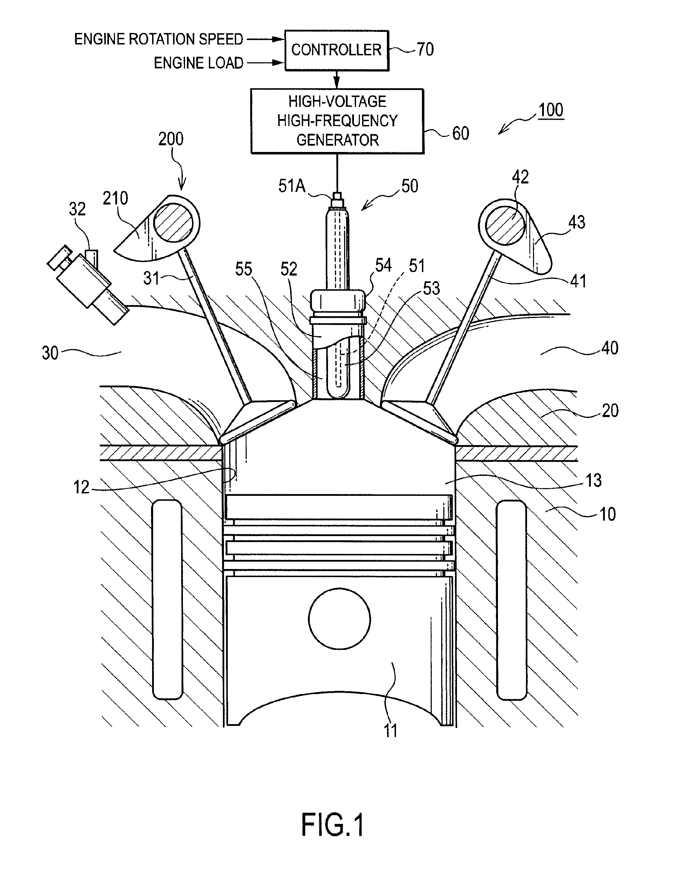

A first embodiment of this invention will be described with reference to FIG. 1, FIG. 2, FIG. 3, FIG. 4, and FIGs 5A to 5E.

Referring to FIG. 1, a compression-ignited internal combustion engine 100 is provided with a cylinder block 10 and a cylinder head 20 disposed on an upper side of the cylinder block 10.

A cylinder 12 is formed in the cylinder block 10 to accommodate a piston 11. A combustion chamber 13 is formed by a crown surface of the piston 11, a wall face of the cylinder 12, and a lower face of the cylinder head 20. When a fuel mixture burns in the combustion chamber 13, the piston 11 reciprocates in the cylinder 12 under a combustion pressure.

An intake port 30 for supplying the fuel mixture to the combustion chamber 13 and an exhaust port 40 for expelling exhaust gas from the combustion chamber 13 are formed in the cylinder head 20.

The intake port 30 is provided with an intake valve 31 and a fuel injection valve 32.

The intake valve 31 is driven by an oscillating cam 210 of a variable valve device 200. The intake valve 31 opens and closes the intake port 30 as the piston 11 moves up and down. The variable valve device 200 changes valve characteristics such as a lift amount of the intake valve 31 or a valve timing thereof.

The fuel injection valve 32 injects fuel toward an opening portion of the intake port 30 into the combustion chamber 13 at a predetermined timing during an exhaust stroke or an intake stroke.

The exhaust port 40 is provided with an exhaust valve 41. The exhaust valve 41 is driven by a cam 43 integrally formed on a camshaft 42. The exhaust valve 41 opens and closes the exhaust port 40 as the piston 11 moves up and down.

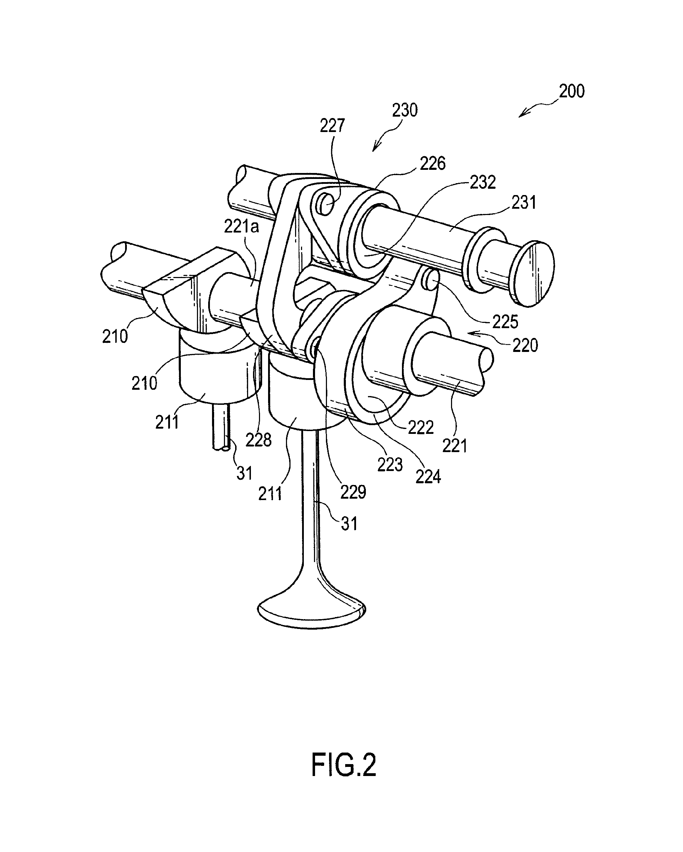

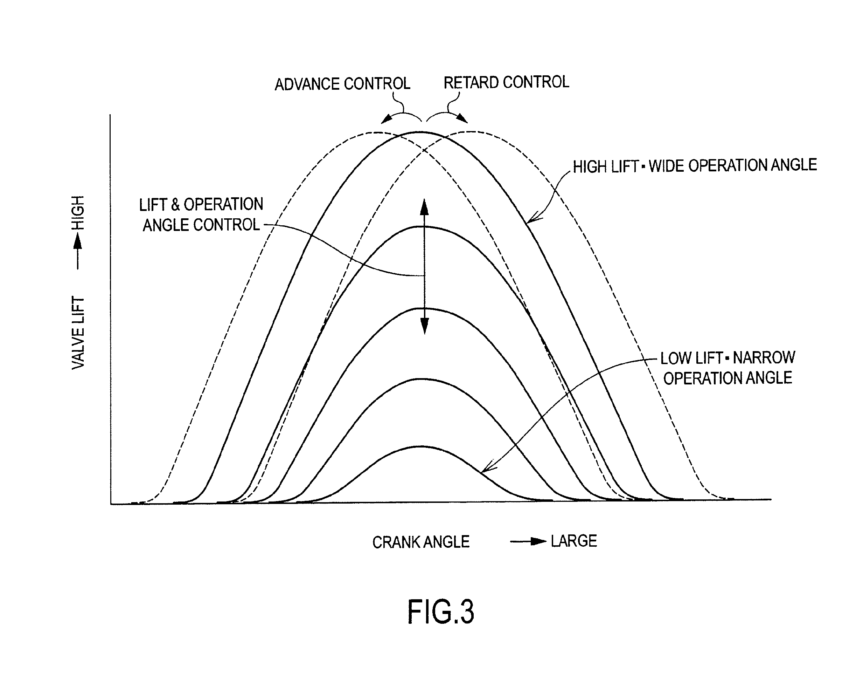

Referring to FIGS. 2 and 3, the variable valve device 200 changing the valve characteristics of the intake valve 31 will be described.

In the compression-ignited internal combustion engine 100 according to the embodiment, two intake ports 30 and two intake valves 31 are provided in one cylinder. The two intake valves 31 are opened and closed in synchronism with each other by a single variable valve device 200.

Referring to FIG. 2, the variable valve device 200 comprises two oscillating cams 210, an oscillating cam driving mechanism 220 for oscillating the oscillating cams 210, and a lift amount varying mechanism 230 capable of continuously changing the lift amounts of the two intake valves 31.

The oscillating cams 210 are fitted onto the outer periphery of a drive shaft 221 extending in the cylinder row direction of the internal combustion engine 100, so as to be free to rotate. The oscillating cams 210 open and close the intake valves 31 via valve lifters 211. The two oscillating cams 210 are connected in the same phase via a connecting cylinder 221A which is supported on the outer periphery of the drive shaft 221 so as to be free to rotate. The two oscillating cams 210 operate in synchronism with each other.

An eccentric cam 222 is fitted on the drive shaft 221 of the oscillating cam driving mechanism 220 in a pressing manner. The eccentric cam 222 having a circular outer peripheral surface is configured such that the center of the outer peripheral surface is offset from the axial center of the drive shaft 221 by a predetermined amount. Since the drive shaft 221 rotates in conjunction with rotation of the crankshaft, the eccentric cam 222 is eccentrically rotated about the axial center of the drive shaft 221.

An eccentric cam 222 is fixed to the drive shaft 221 by press-fitting or the like. The eccentric cam 222 has a circular outer peripheral surface, and the center of its outer peripheral surface is offset from the axis of the drive shaft 221 by a predetermined amount. When the drive shaft 221 rotates together with the crankshaft, the eccentric cam 222 rotates eccentrically around the axis of the drive shaft 221. An annular section 224 at a base end of a first link 223 is fitted onto the outer peripheral surface of the eccentric cam 222 so as to be free to rotate.

The lift amount varying mechanism 230 comprises a control shaft 231 and a rocker arm 226. The rocker arm 226 is supported on the outer periphery of an eccentric cam 232 formed on the control shaft 231, so as to be free to oscillate. The rocker arm 226 has two ends extending radially.

A tip end of the first link 223 is connected to one end of the rocker arm 226 via a connecting pin 225. An upper end of a second link 228 is connected to the other end of the rocker arm 226 via a connecting pin 227. A lower end of the second link 228 is connected via a connecting pin 229 to the oscillating cams 210 for driving the intake valves 31.

When the drive shaft 221 rotates in synchronism with the engine rotation, the eccentric cam 222 makes eccentric rotation, whereby the first link 223 oscillates vertically. Through the oscillation of the first link 223, the rocker arm 226 oscillates around the axis of the eccentric cam portion 232, the second link 228 oscillates vertically, and the two oscillating cams 210 are oscillated within a predetermined rotation angle range via the connecting cylinder 221A. Through the synchronous oscillation of the two oscillating cams 210, the two intake valves 31 open and close the intake ports 30 synchronously.

A cam sprocket which is rotated by the crankshaft is connected to one end of the drive shaft 221. The drive shaft 221 and the cam sprocket are constructed so as to allow adjustment of the phase in their rotating direction. By changing the phase in the rotating direction of the drive shaft 221 and the cam sprocket, it is possible to adjust the phase in the rotating direction of the crankshaft and the drive shaft 221.

One end of the control shaft 231 is connected to a rotary actuator via a gear or the like. By changing the rotation angle of the control shaft 231 by the rotary actuator, the axis of the eccentric cam 232 constituting the oscillation center of the rocker arm 226 swings around the rotation center of the control shaft 231, with the result that the fulcrum of the rocker arm 226 is displaced. As a result, the attitudes of the first link 223 and the second link 228 are changed, and the distance between the oscillation center of the oscillating cams 210 and the rotation center of the rocker arm 226 changes, resulting in a change in the oscillation characteristics of the oscillating cams 210.

Referring to FIG. 3, the valve characteristics of the intake valves 31 driven by the variable valve device 200, or in other words the relationship between the lift amount and the operation angle, will be described. The solid lines in the figure indicate changes in the lift amount of the intake valves 31 when the rotation angle of the control shaft 231 is varied, and the broken lines in the figure indicate changes in the lift positions of the intake valves 31 when the phase in the rotating direction of the drive shaft 221 and the cam sprocket is varied. In the variable valve device 200, by changing the rotation angle of the control shaft 231 and the phase in the rotating direction of the drive shaft 221 with respect to the cam sprocket, it is possible to continuously change the valve characteristics of the intake valves 31 such as the lift amount and the operation angle thereof.

Referring to FIG. 1 again, a discharge portion 50 for producing radicals is installed between the intake port 30 and the exhaust port 40 at the center of the cylinder head 20. The discharge portion 50 is provided with a center electrode 51 as a first electrode, a cylindrical electrode 52 as a second electrode, an insulating portion 53, and a main body fitting 54.

The discharge portion 50 is accommodated in a recess formed in the cylinder head 20. The discharge portion 50 is fixed to the cylinder head 20 via the main body fitting 54 provided at the center in the axial direction.

The center electrode 51 comprises a rod-shaped conductor, and a distal end thereof projects from the main body fitting 54 toward a discharge chamber 55 downwardly. The center electrode 51 is arranged inside the insulating portion 53 made from dielectric. A terminal 51A is attached to a rear end of the center electrode 51.

The cylindrical electrode 52 is a cylinder-shaped conductor, and it projects from the main body fitting 54 downwardly. The cylindrical electrode 52 is provided so as to surround a side portion of the insulating portion 53 to face a side portion of the center electrode 51. The cylindrical electrode 52 is connected to the ground via the cylinder head 20. The discharge chamber 55 as an annular gap facing the combustion chamber 13 is formed between the insulating portion 53 and the cylindrical electrode 52.

The discharge portion 50 is connected to a high-voltage high-frequency generator 60 via the terminal 51A of the center electrode 51. The high-voltage high-frequency generator 60 impresses an AC voltage to the terminal 51A according to the engine operation state.

When the AC voltage is impressed from the high-voltage high-frequency generator 60 to the terminal 51A, non-equilibrium plasma discharge occurs between the insulating portion 53 and the cylindrical electrode 52 of the discharge portion 50, so that the radicals are produced inside the discharge chamber 55. The radicals are active chemical species with high reactivity. A production amount of the radicals increases according to increase of discharge energy of the non-equilibrium plasma discharge. The discharge energy of the non-equilibrium plasma discharge is controlled by a voltage value of the AC voltage impressed by the high-voltage high-frequency generator 60, an impression time thereof, and an AC frequency thereof.

The high-voltage high-frequency generator 60 and the variable valve device 200 are controlled by a controller 70. The controller 70 is constituted by a microcomputer comprising a central processing unit (CPU), a read-only memory (ROM), a random access memory (RAM), and an input/output interface (I/O interface). The controller 70 may be constituted by a plurality of microcomputers.

Detection data from a crank angle sensor for producing a crank angle signal for each predetermined crank angle of the internal combustion engine 100, and an accelerator pedal depression sensor for detecting the operating amount of an accelerator pedal provided in the vehicle are input into the controller 70 as signals. The crank angle signal is used as a signal representative of an engine rotation speed of the internal combustion engine 100. The operating amount of the accelerator pedal is used as a signal representative of an engine load of the internal combustion engine 100.

Based on these input signals, the controller 70 controls the voltage value, the impression time, and the AC frequency of the AC voltage from the high-voltage high-frequency generator 60 to change the discharge energy of the non-equilibrium plasma discharge, and controls the variable valve device 200 to change the valve characteristics of the intake valve 31.

In the compression-ignited internal combustion engine 100, the radicals are produced in order to improve the ignition performance at a compression ignition combustion time, but since the radicals are produced in the discharge chamber 55, the radicals and the fuel mixture in the combustion chamber 13 are hard to mix. In the internal combustion engine 100, therefore, an ignition performance improvement effect is enhanced by adjusting the valve characteristics of the intake valve 31 and a radical production timing in the discharge portion 50 to perform radical diffusion control such that the radicals are diffused in the fuel mixture.

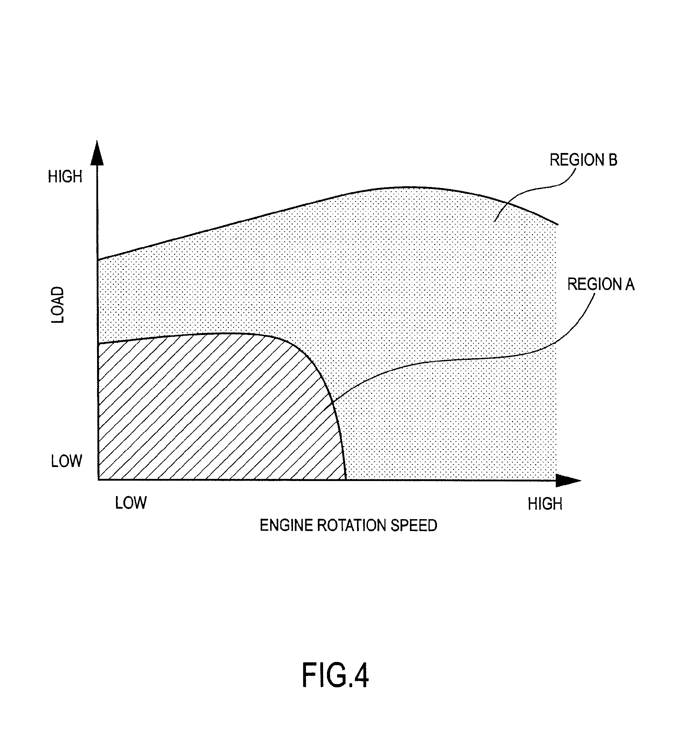

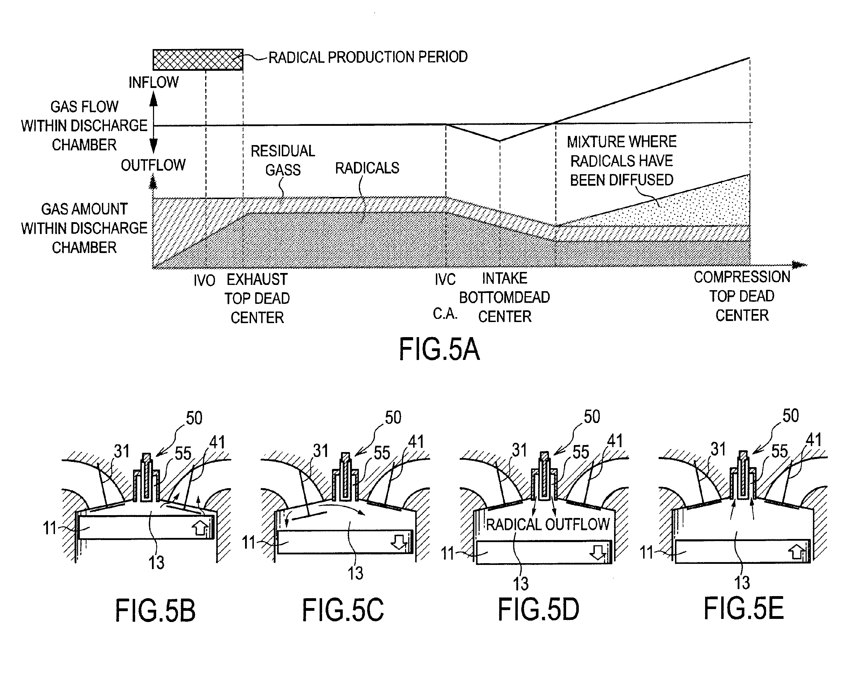

Referring to FIG. 4 and FIGs. 5A to 5E, the radical diffusion control will be described.

The internal combustion engine 100 is operated based on an engine operation map described in FIG. 4.

When the engine operation state is in a region B of high engine rotation speed or high load, the ignition performance at a compression ignition combustion time poses little problem, so that ordinary control is performed without conducting the radical diffusion control. In the ordinary control, the intake valve 31 is controlled such that it is opened at an intake valve open timing (IVO) before an exhaust top dead center and closed at an intake valve close timing (IVC) after an intake bottom dead center. The high-voltage high-frequency generator 60 is controlled so as to produce the radicals at a predetermined timing during an exhaust stroke or an intake stroke.

On the other hand, when the engine operation state is in a region A of a low engine rotation speed and a low load, the radical diffusion control is performed. Such control is performed because the temperature of the fuel mixture compressed in the compression stroke lowers in the low engine rotation speed and the low load, which results in deterioration of the ignition performance. In the radical diffusion control, the IVC of the intake valve 31 is shifted to a timing before the intake bottom dead center and the radical production timing in the discharge chamber 50 is controlled before the IVC.

Referring to FIG. 5B, exhaust gas in the combustion chamber 13 is exhausted in the exhaust stroke where the piston 11 rises up to the exhaust top dead center in the internal combustion engine 100. Referring to FIG. 5A, non-equilibrium plasma discharge is performed in the discharge portion 50 in a period in which the piston 11 reaches the exhaust top dead center in the latter half of the exhaust stroke. Therefore, the amount of the radicals in the discharge chamber 55 increases until the piston 11 reaches the exhaust top dead center.

The intake valve 31 is controlled so as to be opened before the exhaust top dead center and closed before the intake bottom dead center. When the intake valve 31 is opened before the exhaust top dead center, the fuel mixture formed in the intake port is introduced into the combustion chamber 13, as shown in FIG. 5C. The intake valve 31 is closed before the intake bottom dead center, but since the piston 11 lowers even after closing of the intake valve, in-cylinder pressure of the combustion chamber 13 lowers. According to lowering of the pressure, the radicals produced in the discharge chamber 55 flows toward the combustion chamber 13, so that the radicals are diffused in the fuel mixture in the combustion chamber 13, as shown in FIG. 5D.

When the piston 11 passes through the intake bottom dead center to start rising toward a compression top dead center, the fuel mixture containing the radicals flows into the combustion chamber 55, as shown in FIG. 5E. Therefore, as shown in FIG. 5A, the amount of the fuel mixture in the discharge chamber 55 increases after the intake bottom dead center. Thereafter, when the piston 11 reaches the vicinity of the compression top dead center, the fuel mixture in the discharge chamber 55 and the combustion chamber 13 is ignited and combusted in a compressed manner according to a compression action in the compression stroke.

Thus, in the internal combustion engine 100, it is possible to achieve the following effects.

In the internal combustion engine 100, since the IVC of the intake valve 31 is shifted to a timing before the intake bottom dead center and the radicals are produced in the discharge portion 50 before the IVC, the radicals in the discharge chamber 55 can be caused to flow toward combustion chamber 13 by utilizing lowering of the in-cylinder pressure. Since the radicals are diffused in the fuel mixture, it is possible to enhance the ignition performance improvement effect owing to adicals.

In the internal combustion engine 100, since the radical diffusion control is performed in the low engine rotation speed and low load operating region where the ignition performance tends to deteriorate, stable compression ignition and combustion is made possible.

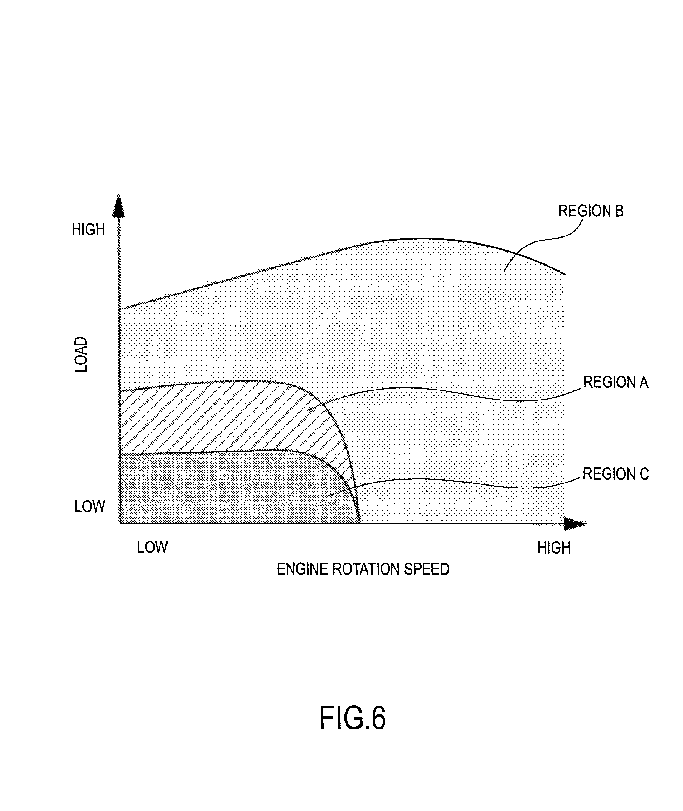

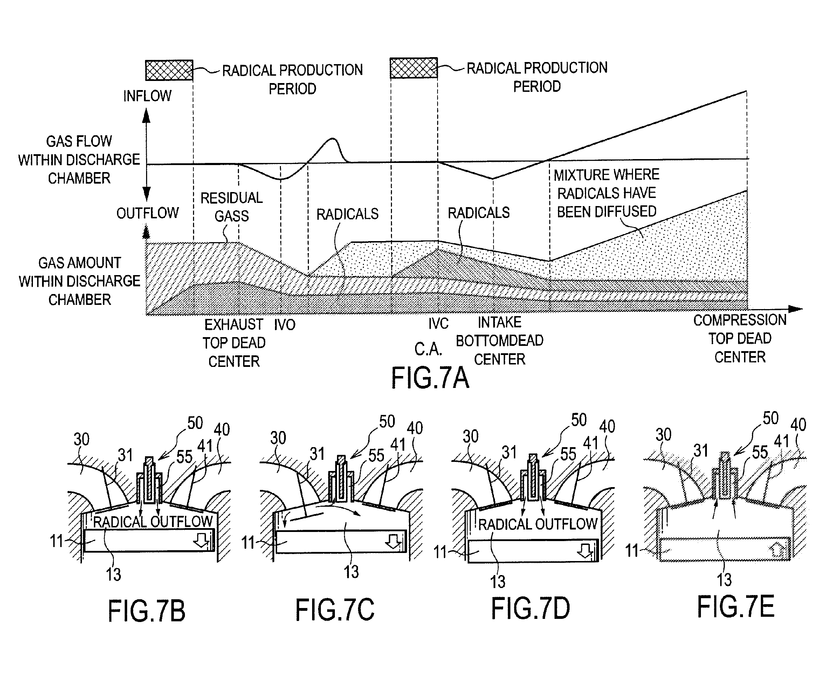

A second embodiment of this invention will be described with reference to FIG. 6 and FIGs. 7A to 7E.

A compression-ignited internal combustion engine 100 according to the second embodiment has a configuration approximately similar to that of the first embodiment, but the former is different from the latter in that second radical diffusion control is performed when an engine operating state is in a region positioned on a side lower in load than the region A.

The internal combustion engine 100 is operated based upon an engine operation map described in FIG. 6.

In the internal combustion engine 100, the first radical diffusion control is performed in the region A of the low engine rotation speed and the low load, while the second radical diffusion control is performed in a region C on a side lower in load than the region A.

Since the first radical diffusion control is the same as the radical diffusion control described in detail in the first embodiment, explanation thereof is omitted.

In the second radical diffusion control, the IVO of the intake valve 31 is shifted to a timing after the exhaust top dead center and the IVC is shifted to a timing before the intake bottom dead center by the variable valve device 200. Further, non-equilibrium plasma discharge is performed in the discharge portion 50 to produce the radicals before the IVO and before the IVC after the IVO.

The second radical diffusion control will be described with reference to FIGs. 7A to 7E.

Referring to FIG. 7A, in the internal combustion engine 100, first non-equilibrium plasma discharge is performed in the discharge portion 50 to increase the amount of the radicals in the discharge chamber 55 in the latter half of the exhaust stroke before the exhaust top dead center.

The intake valve 31 is opened after the exhaust top dead center. Since the piston 11 starts lowering before the IVO, the in-cylinder pressure lowers so that the radicals produced in the discharge chamber 55 flows out toward the combustion chamber 13, as shown in FIG. 7B. When the intake valve 31 is opened after the exhaust top dead center, the fuel mixture formed in the intake port is introduced into the combustion chamber 13, as shown in FIG. 7C. At this time, the fuel mixture flowing from the intake port into the combustion chamber 13 and the radicals flowing out into the combustion chamber 13 are mixed with each other. Further, since the in-cylinder pressure has lowered, as described above, when the fuel mixture is introduced into the combustion chamber 13, a portion of the fuel mixture flows into the discharge chamber 55 of the discharge portion 50. Accordingly, as shown in FIG. 7A, the amount of the fuel mixture in the discharge chamber 55 increases after opening of the intake valve.

Second non-equilibrium plasma discharge is performed in the discharge portion 50 in a period in which the intake valve 31 is closed after the IVO. At a time of the second non-equilibrium plasma discharge, since the fuel mixture exists in the discharge chamber 55, a radical production efficiency becomes higher than that at the time of the first non-equilibrium plasma discharge.

The intake valve 31 is closed before the intake bottom dead center, but the piston 11 lowers until the piston 11 reaches the intake bottom dead center even after the IVC, so that the in-cylinder pressure lowers. When the in-cylinder pressure lowers in this manner, the radicals produced in the discharge chamber 55 flows out into the combustion chamber 13 again, so that the radicals are diffused in the fuel mixture in the combustion chamber 13, as shown in FIG. 7D.

Thereafter, when the piston 11 starts rising towards the compression top dead center, the fuel mixture containing the radicals flows into the discharge chamber 55, as shown in FIG. 7E. When the piston 11 reaches the vicinity of the compression top dead center, the fuel mixture in the discharge chamber 55 and the combustion chamber 13 is ignited and combusted in a compressed manner.

Thus, in the internal combustion engine 100, it is possible to achieve the following effects.

In the internal combustion engine 100, the IVO of the intake valve 31 is shifted to a timing after the exhaust top dead center and the IVC is shifted to a timing before the intake bottom dead center in the region C on the side lower in load than the region A. Further, the first non-equilibrium plasma discharge is performed before the IVO and the second non-equilibrium plasma discharge is performed before the IVC even after the IVO, so that the radicals are produced in the discharge chamber 55 of the discharge portion 50.

As a result, the frequency of outflow of the radicals in the discharge chamber 55 toward the combustion chamber 13 can be increased, so that the radicals are diffused in the fuel mixture more easily than in the case of the first embodiment. Accordingly, the ignition performance improvement effect owing to the radicals can be further enhanced, so that compression ignition and combustion can be performed stably even in the region C where the ignition performance of the fuel mixture deteriorates.

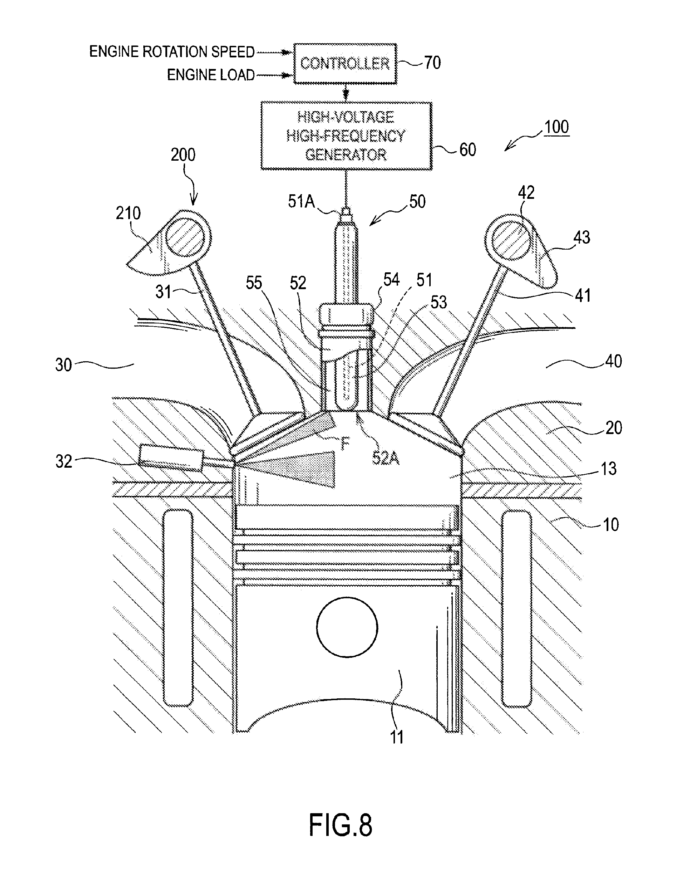

A third embodiment of this invention will be described with reference to FIG. 8.

The compression-ignited internal combustion engine 100 according to the third embodiment has a configuration approximately similar to that of the second embodiment, but the former is different from the latter in that the fuel injection valve 32 is arranged so as to directly inject fuel into the combustion chamber 13.

The fuel injection valve 32 is arranged on a side portion of the cylinder head 20 so as to inject fuel into the combustion chamber 13 directly. The fuel injection valve 32 injects fuel before opening of the intake valve 31. The fuel injection valve 32 is configured such that a portion F of the injected fuel is directed to an opening end 52A of the cylindrical electrode 52 in the discharge portion 50.

In the compression-ignited internal combustion engine 100, it is possible to achieve the following effects when the engine operating state is in the region C.

Since the fuel is directly injected into the discharge chamber 55 of the discharge portion 50 before the second non-equilibrium plasma discharge is performed in the second radical diffusion control, the radical production efficiency can be enhanced as compared with the case that the fuel mixture flows into the discharge chamber 55 like the second embodiment. As a result, it is possible to suppress energy inputted into the discharge portion 50.

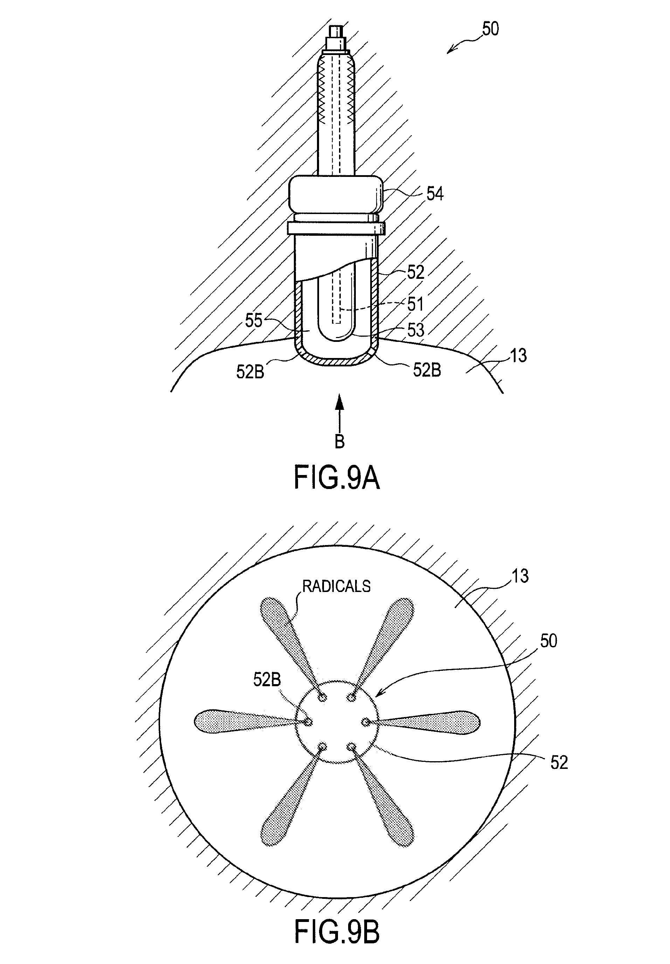

A fourth embodiment of this invention will be described with reference to FIG. 9A and FIG. 9B.

FIG. 9A is a schematic configuration view showing the discharge portion 50 of the internal combustion engine 100 according to the fourth embodiment. FIG. 9B is a diagram of the discharge portion 50 viewed from a direction B in FIG. 9A.

The compression-ignited internal combustion engine 100 according to the fourth embodiment has a configuration approximately similar to that of the first embodiment, but the former is different from the latter in that the discharge chamber 55 and the combustion chamber 13 are caused to communicate with each other via communication paths 52B formed in the cylindrical electrode 52.

Referring to FIG. 9A, the cylindrical electrode 52 of the discharge portion 50 in the internal combustion engine 100 is configured so as to cover the insulating portion 53. A gap formed between the insulating portion 53 and the cylindrical electrode 52 serves as the discharge chamber 55. The cylindrical electrode 52 is provided with a plurality of communication paths 52B with a small diameter at a distal end thereof, so that the discharge chamber 55 and the combustion chamber 13 communicate with each other via these communication paths 52B.

Referring to FIG. 9B, the plurality of communication paths 52B are arranged so as to be positioned on a distal end side face of the cylindrical electrode 52 at regular intervals along a circumferential direction.

In the internal combustion engine 100, the radicals in the discharge chamber 55 are caused to flow out toward the combustion chamber 13 by utilizing lowering of the in-cylinder pressure caused by piston lowering after closing of the intake valve. An outflow speed is accelerated when the radicals flow out toward the combustion chamber 13 via the communication paths 52B. Further, the radicals in the discharge chamber 55 are injected into the combustion chamber 13 radially, as shown in FIG. 9B.

In the internal combustion engine 100, it is possible to achieve the following effects.

In the internal combustion engine 100, since the radicals accelerated are injected into the combustion chamber 13 radially, the radicals are diffused in the fuel mixture more easily than in the case of the first embodiment, so that it is possible to further enhance the ignition performance improvement effect owning to the radicals.

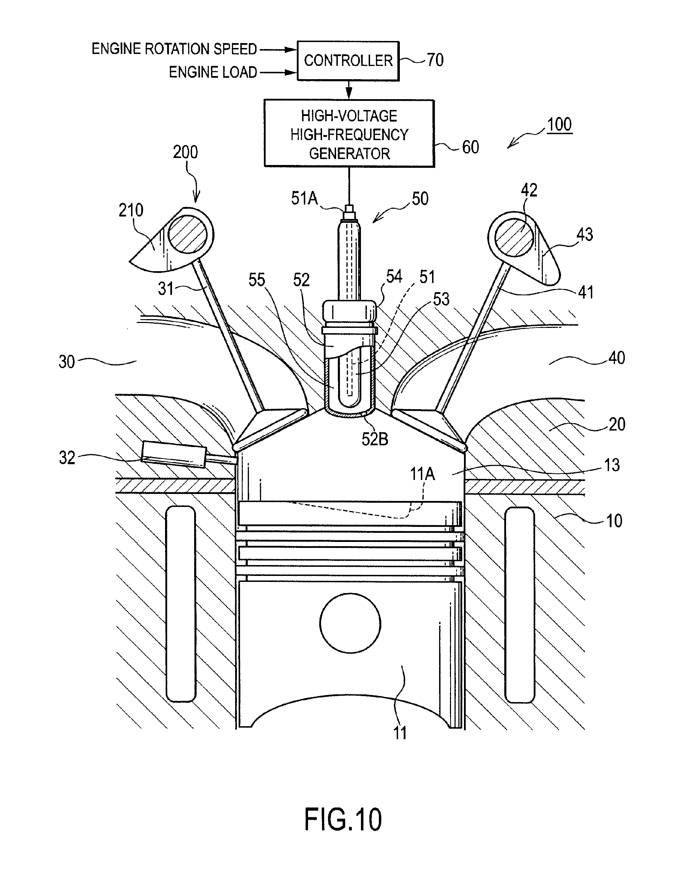

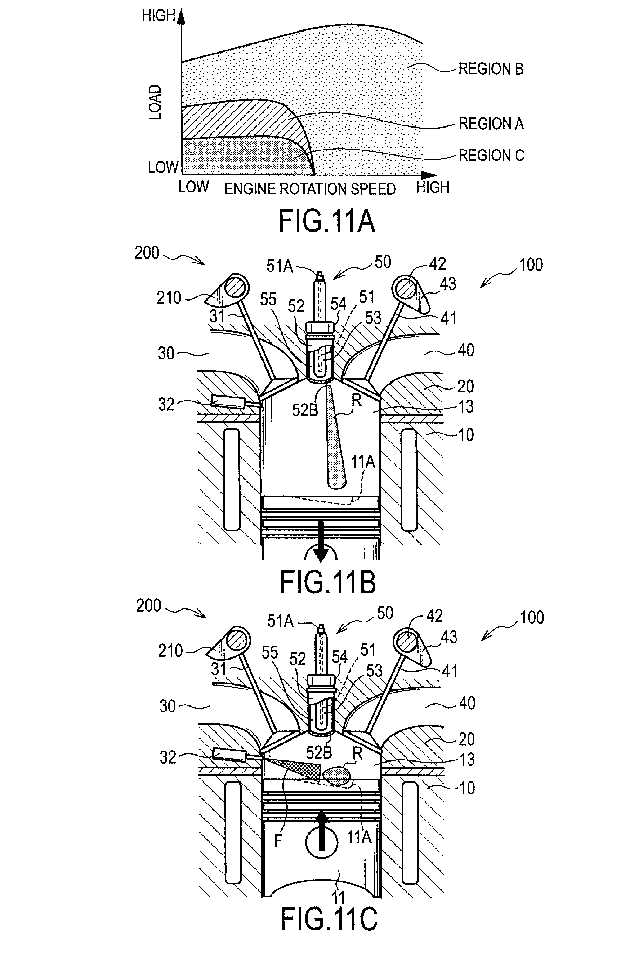

A fifth embodiment of this invention will be described with reference to FIG. 10 and FIGs. 11A to 11C.

The compression-ignited internal combustion engine 100 according to the fifth embodiment has a configuration approximately similar to that of the fourth embodiment, but the former is different from the latter in configuration where the fuel mixture is stratified when the engine operating state is in a region positioned on the side lower in load than the region A.

Referring to FIG. 10, the piston 11 of the internal combustion engine 100 is formed with a recess portion 11A obtained by recessing a portion of a piston crown portion.

The communication path 52B of the cylindrical electrode 52 in the discharge portion 50 is arranged such that the radicals injected from the communication path 52B are directed to the recess portion 11A of the piston 11.

The fuel injection valve 32 is disposed on a side portion of the cylinder head 20 so as to inject fuel into the combustion chamber 13 directly. The fuel injection valve 32 is configured such that the fuel injected is directed to the recess portion 11A of the piston 11.

Referring to FIG. 11A, the internal combustion engine 100 performs stratification of the fuel mixture in the region C positioned on the side lower in load than the region A by driving the fuel injection valve 32 during the compression stroke. Incidentally, the radical diffusion control similar to that in the region A is performed even in the region C.

Referring to FIG. 11B and FIG. 11C, stratification operation of the internal combustion engine 100 performed when the engine operating state is in the region C will be described.

Since the radical diffusion control is performed in the region C in the internal combustion engine 100, the radicals formed in the discharge chamber 55 are injected toward the combustion chamber 13 via the communication path 52B in a period in which the piston 11 lowers down to the intake bottom dead center after closing of the intake valve, as shown in FIG. 11B. The radicals are injected toward the recess portion 11A of the piston 11, as shown in a region R.

In the internal combustion engine 100, the fuel is directly injected into the combustion chamber 13 by the fuel injection valve 32 during the compression stroke where the piston 11 rises toward the compression top dead center. Referring to FIG. 11C, the fuel is injected toward the recess portion 11A of the piston 11, as shown in a region F. At this time, since the radicals stay in the recess portion 11A of the piston 11, as shown in the region R, the radicals and the fuel mix to form stratified fuel mixture. Thereafter, when the piston 11 reaches the vicinity of the compression top dead center, the fuel mixture is ignited by compression and combusted.

In the internal combustion engine 100, it is possible to achieve the following effects.

In the internal combustion engine 100, the radicals are stayed in the recess portion 11A of the piston 11 and the fuel is injected toward the recess portion 11A during the compression stroke in the region C positioned on the lower load side. Therefore, ignition performance can be improved efficiently even when stratification operation is performed in the region C. Further, it is possible to achieve improvement of fuel consumption performance of the internal combustion engine 100 by performing stratification operation.

Although the invention has been described above with reference to certain embodiments, the invention is not limited to the embodiments described above. Modifications and variations of the embodiments described above will occur to those skilled in the art, within the scope of the claims.

The first embodiment is configured such that the in-cylinder pressure is lowered to cause the radicals to flow from the discharge chamber 55 toward the combustion chamber 13, by setting the IVC of the intake valve 11 before the intake bottom dead center, but the invention is not limited to this configuration. For example, such a configuration can be adopted that the valve timing of the intake valve 31 is controlled by an electromagnetic actuator and an intake valve close period where the intake valve 31 is closed is set in a period where the piston 11 lowers from the exhaust top dead center to the intake bottom dead center. Since the in-cylinder pressure lowers during the intake valve close period, if the radicals are produced in the discharge chamber 55 by termination of the intake valve close period, the radicals in the discharge chamber 55 can be caused to flow toward the combustion chamber 13 to be diffused in the fuel mixture in the combustion chamber 13.

The contents of JP2007-298294 with a filing data of November 16, 2007 in Japan, the contents of JP2007-298409 with a filing data of November 16, 2007 in Japan, and JP2008-163355 with a filing data of June 23, 2008 in Japan, are hereby incorporated by reference.

### INDUSTRIAL APPLICABILITY

As described above, the invention achieves especially desirable effect in application to an internal combustion engine which supplies radicals to a combustion chamber.

The embodiments of this invention in which an exclusive property or privilege are claimed are defined as follows:

## Claims

1. An internal combustion engine (100) which supplies radicals to a combustion chamber (13), **characterized by**:
an intake valve (31) which opens and closes an intake port (30);
a valve timing adjustment device (200) which adjusts a valve timing of the intake valve (31);
a discharge portion (50) including a first electrode (51), a dielectric (53) covering the first electrode (51), and a second electrode (52) disposed at a position facing the dielectric (53), where a discharge chamber (55) formed between the second electrode (52) and the dielectric (53) is configured so as to face the combustion chamber (13) and a non-equilibrium plasma discharge is generated in the discharge chamber (55);
a voltage impressing means (60) which impresses a voltage to the discharge portion (50) such that the radicals are produced in the discharge chamber (55) by the non-equilibrium plasma discharge; and
a controller (70) which controls the valve timing control device (200) to close the intake valve (31) in an intake valve close period in which a piston lowers from an exhaust top dead center to an intake bottom dead center so as to diffuse the radicals in the discharge chamber (55) into the combustion chamber (13).

2. The internal combustion engine (100) as defined in Claim 1, **characterized in that** the controller (70) controls the voltage impressing means (60) such that non-equilibrium plasma discharge is generated by termination of the intake valve close period.

3. The internal combustion engine (100) as defined in Claim 1 or Claim 2, **characterized in that** the controller (70) controls the valve timing adjustment device (200) such that a close timing of the intake valve (31) occurs before the intake bottom dead center to set the intake valve close period.

4. The internal combustion engine (100) as defined in Claim 1 or Claim 2, **characterized in that** the controller (70) controls the valve timing adjustment device (200) such that an open timing of the intake valve (31) occurs after the exhaust top dead center to set the intake valve close period.

5. The internal combustion engine (100) as defined in Claim 1 or Claim 2, **characterized in that** the controller (70) shifts an open timing of the intake valve (31) to a timing after the exhaust top dead center to set a first intake valve close period, shifts a close timing of the intake valve (31) to a timing before the intake bottom dead center to set a second intake valve close period, and controls the voltage impressing means (60) so as to generate non-equilibrium plasma discharge by termination of the first intake valve close period and by termination of the second intake valve close period after termination of the first intake valve close period.

6. The internal combustion engine (100) as defined in Claim 5, **characterized by**
a fuel supplying means (32) which supplies fuel to the internal combustion engine (100),
wherein the controller (70) controls the fuel supplying means (32) so as to supply fuel before the intake valve (31) is opened.

7. The internal combustion engine (100) as defined in Claim 6, **characterized in that** the fuel supplying means (32) is configured so as to inject fuel into the combustion chamber (13) directly such that at least a portion of fuel injected is directed to the discharge chamber (55).

8. The internal combustion engine (100) as defined in any one of Claims 1 through Claim 4, **characterized in that** the second electrode (52) is formed so as to separate the discharge chamber (55) from the combustion chamber (13) and is provided with a communication path (52B) to causing the discharge chamber (55) and the combustion chamber (13) to communicate with each other.

9. The internal combustion engine (100) as defined in Claim 8, **characterized in that** a plurality of the communication paths (52B) are arranged equally in a circumferential direction of the second electrode (52) formed in an approximately cylindrical shape.

10. The internal combustion engine (100) as defined in Claim 8, **characterized by**
a piston (11) which has a recess portion (11A) formed such that a piston crown portion is recessed; and
a fuel supplying means (32) which injects fuel into the combustion chamber (13) directly such that at least a portion of fuel injected is directed to the recess portion (11A),
wherein the second electrode (52) is configured such that the radicals flowed out via the communication path (52B) are directed to the recess portion (11A), and the controller (70) controls the fuel supplying means (32) to inject fuel during a compression stroke.

11. The internal compression engine (100) as defined in any one of Claim 1 through Claim 10, **characterized in that** the internal combustion engine (100) is a compression-ignited internal combustion engine which performs that a fuel mixture is ignited and combusted by compression action in a compression stroke.
